## Europäisches Patentamt
## European Patent Office
## Office européen des brevets

(19)

(11) Numéro de publication: **0 095 978**
**B1**

(12) **FASCICULE DE BREVET EUROPEEN**

(45) Date de publication du fascicule du brevet:
24.07.85

(51) Int. Cl.⁴: **C 02 F 1/52**

(21) Numéro de dépôt: **83401059.7**

(22) Date de dépôt: **26.05.83**

(54) Procédé de traitement d'eau au moyen de polychlorure ferrique.

(30) Priorité: **28.05.82 FR 8209393**

(43) Date de publication de la demande:
**07.12.83 Bulletin 83/49**

(45) Mention de la délivrance du brevet:
**24.07.85 Bulletin 85/30**

(84) Etats contractants désignés:
**BE DE GB NL SE**

(56) Documents cités:
A.F. MIORIN et al.: "Wastewater treatment plant
design", 1977, pages 169-171, W.P.C.F. Washington,
D.C., USA, Lancaster Press Inc.
HANS-DIETRICH HELD: "Kühlwasser", 1970, pages
72-74, Vulkan-Verlag Dr. W. Classen, Essen, DE.

(73) Titulaire: **SOCIETE LYONNAISE DES EAUX ET DE
L'ECLAIRAGE Société dite:, 45, rue Cortambert,
F-75016 Paris (FR)**

(72) Inventeur: **Fiessinger, François, 1, rue Alphège Thomas,
F-92370 Chaville (Hauts de Seine) (FR)**
Inventeur: **Thebault, Paul, 60, Allée des Acacias,
F-59229 Teteghem (Nord) (FR)**
Inventeur: **Codiasse, Daniel, 202, Avenue de la
République, F-78500 Sartrouville (Yvelines) (FR)**

(74) Mandataire: **Armengaud, Charles, Cabinet ARMENGAUD
AINE 3, Avenue Bugeaud, F-75116 Paris (FR)**

## Description

La présente invention concerne un procédé de traitement d'eau au moyen de polychlorure ferrique.

On sait que, pour obtenir une sédimentation efficace des particules contenues dans l'eau, on introduit dans cette eau des réactifs qui provoquent une coagulation de ces particules, coagulation nécessaire pour leur floculation et leur sédimentation.

L'utilisation, comme réactifs coagulants, de sels de fer, en particulier du chlorure ferrique, est bien connue. On utilise généralement une solution de chlorure ferrique commercial titrant environ 40 à 41% en poids de chlorure ferrique $FeCl_3 \cdot 6H_2O$.

On sait que la capacité du chlorure ferrique à déstabiliser les suspensions colloïdales, donc son pouvoir coagulant, résulte de l'hydrolyse qui suit sa dissolution, avec formation intermédiaire de complexes susceptibles de se polymériser et d'amorcer ainsi le processus de floculation. Cette hydrolyse a été étudiée par de nombreux auteurs parmi lesquels on peut citer LAMB et JACQUES A.B. qui ont envisagé un état d'équilibre instable entre la phase polymérisée de l'hydroxyde ferrique et les formes monomériques, dans un article paru dès 1938 dans Jl Am. Chem. Soc. (1938, 61, p. 1215-1225); plus récemment H S U Pa Ho et ses collaborateurs ont montré que l'on pouvait obtenir des solutions polymérisées et stables de sels ferriques en chauffant à différentes températures des solutions diluées de $FeClO_4$, la nature et la stabilité des hydrolysats obtenus étant fonction de la température et de la concentration en fer (HSU Pa Ho et RAGONNE S.E. — Jl Soil Sci. (1972) 23, No 4 p. 49 — HSU Pa Ho — Clay & Clay Minerals (1973) 21, p. 367-377 — HSU Pa Ho et Wang Ming — Soil Sci. Soc. of Am. H (1980) 44, No 1, p. 143-149 "Effect of temperature on the appearance and stability of hydrolyzed $(FeClO_4)_3$ solutions").

D'après ces différents auteurs le facteur clé qui gouverne l'apparence et la stabilité de solutions obtenues semble être le degré initial de sur-saturation de la solution par rapport à l'hydroxyde amorphe.

Par ailleurs, il est possible d'obtenir ces différents complexes par neutralisation du chlorure ferrique à la soude ou à la chaux. Leur utilisation comme coagulants en remplacement du chlorure ferrique seul a déjà été envisagée par de nombreux auteurs. On peut citer à cet égard les études de Rengasamy P. et Oades J.M. décrites dans Aus. J. Soil. Res. (1977) 15 — p. 1-13 et de Stumm W. et O'Melia R.R. dans J.A.W.W.A. (1968) 60, p. 514 "Stoechiometry of coagulation" et Stumm W. et Morgan J.J. dans J.A.W.W.A. (1962) 54, p. 971-994 "Chemical aspects of coagulation".

L'utilisation de ces solutions s'est avérée a posteriori peu intéressante pour des raisons d'ordre économique alors que les résultats obtenus n'étaient pas suffisamment différents des résultats obtenus avec le chlorure ferrique seul.

La présente invention concerne un procédé de coagulation et de floculation des particules présentes dans l'eau, par injection dans l'eau d'une solution de polychlorure ferrique, d'une grande simplicité, facile à mettre en œuvre, particulièrement efficace et peu coûteux.

Ce procédé est caractérisé en ce que l'on injecte dans l'eau à traiter une solution de polychlorure ferrique préparée à une température au moins égale à 85° C et maintenue à cette température lors de son injection.

L'invention a également pour objet un procédé de préparation de cette solution de polychlorure ferrique.

Suivant une caractéristique de l'invention, ce procédé de préparation consiste à diluer à l'eau de 3 à 75 fois, à une température d'au moins 85° C, une solution de chlorure ferrique du commerce contenant 41% en poids de $FeCl_3$ jusqu'à obtention d'une solution à concentration de 0,05 M à 1,25 M en $FeCl_3$, la température d'au moins 85° C étant maintenue pendant toute la durée de l'opération de dilution et jusqu'au moment de l'injection de la solution dans l'eau à traiter.

La dilution est effectuée sous agitation violente pendant une durée d'environ 1 à 10 min, suivant la concentration finale désirée, cette dernière étant d'autant plus grande que sera violente l'agitation.

Suivant une autre caractéristique de l'invention le procédé consiste en ce que l'on porte à au moins 85° C une solution de chlorure ferrique du commerce, sous agitation violente, pendant 10 min au maximum.

Dans les deux cas les solutions obtenues ont une teinte brun foncé.

La mise en œuvre du procédé est d'une extrême simplicité: dans un réacteur équipé d'un dispositif d'agitation et chauffé extérieurement par un dispositif de chauffage à une température au moins égale à 85° C, on mélange une solution de chlorure ferrique du commerce et de l'eau, déminéralisée ou non, suivant la concentration finale désirée, cette eau provenant de tout système quelconque permettant de la porter à au moins 85° C. La solution formée est alors injectée dans l'eau à traiter au moyen d'une canne d'injection disposée à la base du réacteur et maintenue à au moins 85° C par un système chauffant quelconque.

Toute installation, propre à réaliser les conditions opératoires du procédé suivant l'invention, peut être envisagée.

On peut néanmoins avantageusement utiliser une installation décrite ci-après en référence au dessin annexé, uniquement d'ailleurs à titre d'exemple non limitatif.

L'eau de dilution, préalablement chauffée, par exemple dans un système A', est introduite par une canalisation A dans un réacteur C.

Le chlorure ferrique préalablement chauffé et stocké dans un système B' est introduit dans le réacteur C par une canalisation B.

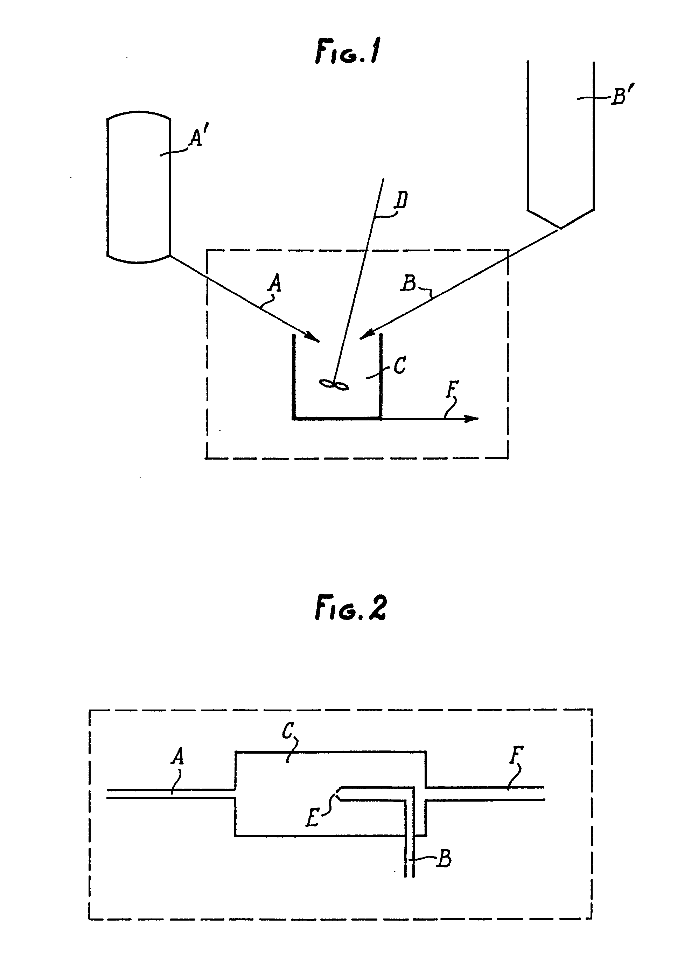

Pour réaliser l'agitation énergique du mélange se trouvant dans le réacteur C, ce dernier est dans l'exemple traité à la fig. 1 muni d'un agitateur mécanique D de tout type quelconque convenable.

Dans l'exemple traité à la fig. 2 cette agitation est réalisée par l'introduction du chlorure ferrique chaud au moyen d'une canalisation B munie d'un convergent accélérant la vitesse de sortie du chlorure ferrique.

On a traité par coagulation une eau de rivière par des solutions de chlorure ferrique (A) et par des solutions de polychlorure ferrique préparées suivant l'invention par dilution à l'eau (B et C) obtenues au moyen d'une installation telle que décrite précédemment, les solutions B et C ayant des concentrations en sels de fer différentes. Dans les trois cas, le taux de traitement correspondait au taux de traitement habituellement déterminé par les techniques classiques utilisées en traitement de l'eau.

La solution B a été préparée dans les conditions de l'invention par addition de 4,1 ml d'une solution de chlorure ferrique du commerce à 41%, dans un réacteur porté à 85° C, à 97 ml d'eau déminéralisée, elle-même portée à une température supérieure à 85° C. On a ainsi obtenu une solution de polychlorure ferrique à 0,15 M de $FeCl_3 \cdot 6 H_2O$.

La solution C a été obtenue de la même manière en ajustant la dilution de façon à obtenir une solution de polychlorure ferrique à 0,94 M de $FeCl_3 \cdot 6H_2O$.

Les résultats sont consignés dans les tableaux ci-après avec les légendes suivantes:

A — solution commerciale de $FeCl_3$ à 3,7 M de $FeCl_3 \cdot 6H_2O$

B — solution de polychlorure ferrique suivant l'invention à 0,15 M de $FeCl_3 \cdot 6H_2O$

C — solution de polychlorure ferrique suivant l'invention à 0,94 M de $FeCl_3 \cdot 6H_2O$

*Tableau 1*

| | Eau brute | Eau traitée avec la solution A | | Eau traitée avec la solution B | |
|---|---|---|---|---|---|
| $FeCl_3 \cdot 6H_2O$ (taux de traitement) | — | $0,28 \cdot 10^{-3}$ M | $0,50 \cdot 10^{-3}$ M | $0,28 \cdot 10^{-3}$ M | $0,50 \cdot 10^{-3}$ M |
| Température<br>pH | 9,5<br>7,8 | —<br>7,1 | —<br>6,80 | —<br>6,85 | —<br>6,50 |
| Turbidité exprimée en Unités Jackson après 10 min de décantation | 7,5 | 2,5 | 2,5 | 1,9 | 2,3 |
| Oxydabilité au permanganate | 7,2 | 3,9 | 3,2 | 3,1 | 2,8 |
| Pourcentage de réduction des matières organiques | — | 46 | 55,5 | 57 | 61,1 |

*Tableau 2*

| | Eau brute | Eau traitée avec la solution A | | Eau traitée avec la solution C | |
|---|---|---|---|---|---|
| $FeCl_3 \cdot 6H_2O$ (taux de traitement) | — | $0,25 \cdot 10^{-3}$ M | $0,5 \cdot 10^{-3}$ M | $0,25 \cdot 10^{-3}$ M | $0,5 \cdot 10^{-3}$ M |
| Température | 12 | — | — | — | — |
| Turbidité (U.J.) | 5 | 1,7 | 1,4 | 1,4 | 1,2 |
| pH | 7,82 | 7,18 | 6,8 | 7,2 | 6,7 |
| Oxydabilité au permanganate | 7,5 | 4,7 | 3,7 | 4,4 | 3,4 |
| Pourcentage de réduction des matières organiques | — | 37 | 50,6 | 41,30 | 54,6 |

## Revendications

1. Procédé pour le traitement d'eau en vue de sa clarification par injection d'une solution de polychlorure ferrique, caractérisé en ce que l'on injecte dans l'eau à traiter une solution de polychlorure ferrique dont la température est maintenue à une valeur au moins égale à 85° C.

2. Procédé suivant la revendication 1, caractérisé en ce que la solution de polychlorure ferrique injectée dans l'eau à traiter est préparée par dilution à l'eau, de 3 à 75 fois, à une température d'au moins 85° C et sous agitation, d'une solution de chlorure ferrique du commerce contenant 41% en poids de chlorure ferrique, jusqu'à obtention d'une solution à concentration de 0,05 M à 1,25 M en chlorure ferrique, la température d'au moins 85° C étant maintenue pendant toute l'opération de dilution et jusqu'au moment de l'injection de la solution dans l'eau à taiter.

3. Procédé suivant la revendication 1, caractérisé en ce que la solution de polychlorure ferrique injectée dans l'eau à traiter est préparée en portant une solution de chlorure ferrique du commerce à une température au moins égale à 85° C, sous agitation, pendant une durée maximale de 10 min.

## Patentansprüche

1. Verfahren für die Wasserbehandlung mit Eisen-(III)-Polychlorid, dadurch gekennzeichnet, dass in das zu behandelnde Wasser eine Lösung von Eisen-III-Polychlorid eingespritzt wird, dessen Temperatur auf einem Wert von mindestens gleich 85° C gehalten wird.

2. Verfahren nach Anspruch 1, dadurch gekennzeichnet, dass die in das zu behandelnde Wasser eingespritzte Lösung aus Eisen-III-Polychlorid gebildet ist durch eine 3- bis 75-malige Verdünnung durch Wasser bei einer Temperatur von mindestens 85° C und unter Rühren einer Lösung von handelsüblichem Eisen-III-Chlorid enthaltend 41 Gew.-% Eisen-III-Chlorid, bis man eine Lösung mit der Konzentration von 0,05 M bis 1,25 M an Eisen-III-Chlorid erhält, wobei die Temperatur von mindestens 85° C während des gesamten Vorgangs der Verdünnung und bis zum Augenblick des Einspritzens der Lösung in das zu behandelnde Wasser aufrechterhalten wird.

3. Verfahren nach Anspruch 1, dadurch gekennzeichnet, dass die in das zu behandelnde Wasser eingespritzte Lösung aus Eisen-III-Polychlorid gebildet ist, indem man eine Lösung von Eisen-III-Chlorid aus dem Handel auf eine Temperatur von mindestens 85° C unter Rühren während einer maximalen Dauer von 10 min erwärmt.

## Claims

1. Process for treating water by means of ferric polychloride, characterized in that a solution of ferric polychloride, the temperature of wich is held at a level of at least 85° C is injected into the water to be treated.

2. Process according to claim 1, characterized in that the solution of ferric polychloride injected into the water to be treated is prepared by a 3 to 75-times dilution in water, at a temperature of at least 85° C and while stirring, of a commercial ferric chloride solution containing 41% by weight of ferric chloride, until a solution having a 0.05 M to 1.25 M ferric chloride concentration is obtained, the temperature being maintained at at least 85° C during the entire diluting operation and until the moment when the solution is injected into the water to be treated.

3. Process according to claim 1, characterized in that the solution of ferric polychloride injected into the water to be treated is prepared by bringing a commercial ferric chloride solution to a temperature of at least 85° C, while stirring, during a maximum period of 10 min.

# Fig.1

# Fig.2